# EUROPÄISCHE PATENTANMELDUNG

(11) **EP 1 970 328 A2**
(43) Veröffentlichungstag der Anmeldung: **17.09.2008**
(21) Anmeldenummer: 08001617.3
(22) Anmeldetag: 29.01.2008
(51) Int. Cl.: B65G 15/12, B65G 47/24, G07F 7/06

(54) **Transporteinrichtung für Getränkebehältnisse**

(30) Priorität: 15.03.2007 DE 102007013204
(71) Anmelder: Wincor Nixdorf International GmbH, 33106 Paderborn (DE)
(72) Erfinder: Springsguth, Stephan, 98704 Langenwiesen (DE)

(57) **Zusammenfassung**

Es wird eine Transportvorrichtung für Behälter wie beispielsweise Flaschen oder Dosen vorgeschlagen. Diese ist mit einem Förderband (1) zum Transport eines Behälters (4) in liegender Position in Richtung seiner Längsachse und mit einer Rotationswalze (2), deren Rotationsachse parallel zum Förderband (1) verläuft, ausgestattet. Die Transportvorrichtung zeichnet dadurch aus, dass das Förderband (1) und die Rotationswalze (2) an einem Träger befestigt sind und eine Förderband-Rotationswalzen-Einheit bilden. Ferner ist die Transportvorrichtung mit einer Schwenkeinrichtung ausgestattet um die Förderband-Rotationswalzen-Einheit um eine zur Rotationsachse der Rotationswalze (2) parallel verlaufende, gedachte Schwenkachse (5) zu drehen.

## Beschreibung

Die Erfindung geht aus von einer Transportvorrichtung für Behälter wie beispielsweise Flaschen oder Dosen nach dem Oberbegriff des Anspruchs 1.

Derartige Transportvorrichtungen werden beispielsweise für Behälter-Rücknahmeautomaten eingesetzt. Behälter-Rücknahmeautomaten dienen zur Rücknahme von Behältern wie beispielsweise Dosen und Flaschen aus Glas, Kunststoff oder Metall. Dabei werden die Behälter mit Hilfe einer Fördereinrichtung in liegender Position an einem oder mehreren ihrer Identifizierung dienenden Detektoren vorbeigeführt. Anhand der durch den Detektor ermittelten Daten werden die charakteristischen Merkmale des Behälters erfasst. Insbesondere wird festgestellt, ob es sich um einen Einweg- oder einen Mehrwegbehälter handelt.

Aus dem Stand der Technik sind Transportvorrichtungen für Behälter bekannt, welche zwei V-förmig angeordnete endlose Förderbänder aufweisen. Auf diesen Förderbändern wird ein Behälter in liegender Position in Richtung seiner Längsachse transportiert. Unterhalb der Förderbänder sind Walzen angeordnet, die mittels eines Rotationsantriebs in Drehung versetzt werden. Durch Verschwenken der Förderbänder fällt der Behälter auf die darunter liegenden Walzen und wird von diesen gedreht. Ein oder mehrere oberhalb der Walzen angebrachten Detektoren erfassen die wesentlichen Merkmale des Behälters wie beispielsweise einen ldentifikationscode oder einen Barcode. Durch die Drehung des Behälters wird gewährleistet, dass die für die Erkennung wesentlichen Merkmale des Behälters durch einen Detektor erfasst werden können. Anschließend werden die Förderbänder wiederum verschwenkt, so dass der Behälter von den Walzen angehoben und durch die Förderbänder weitergeführt wird. Als nachteilig erweist sich, dass zur Erkennung der wesentlichen Merkmale des Behälters mit Hilfe eines oder mehrerer Detektoren der Behälter in eine unterhalb der Förderebene angeordnete Position versetzt werden muss. Dies führt dazu, dass die Transportvorrichtung insbesondere in vertikaler Richtung ein großes Baumaß aufweist. Darüber hinaus wird während der Erkennung der wesentlichen Merkmale des Behälters anhand eines oder mehrerer Detektoren der Fördervorgang unterbrochen. Dies führt dazu, dass der gesamte Vorgang des Transportierens und Erkennens eines Behälters viel Zeit beansprucht.

Der vorliegenden Erfindung liegt die Aufgabe zugrunde, eine Transportvorrichtung für Behälter zur Verfügung zu stellen, bei der eine Erkennung der wesentlichen Merkmale eines Behälters anhand eines Detektors während des Fördervorgangs möglich ist, und die sich durch ein kompakteres Baumaß insbesondere auszeichnet.

Diese Aufgabe wird durch eine Transportvorrichtung mit den Merkmalen des Anspruchs 1 gelöst. Die Transportvorrichtung zeichnet sich dadurch aus, dass lediglich ein Förderband und eine Rotationswalze an einem Träger befestigt sind und eine Förderband-Rotationswalzen-Einheit bilden. Die Transporteinrichtung ist mit einer Schwenkeinrichtung ausgestattet, um die Förderband-Rotationswalzen-Einheit um eine zur Rotationsachse der Rotationswalze parallel verlaufende, gedachte Schwenkachse zu drehen. Gegenüber den aus dem Stand der Technik bekannten Transportvorrichtungen hat die erfindungsgemäße Transportvorrichtung den Vorteil, dass sie aufgrund nur einer Rotationswalze und nur eines Förderbandes, welche nebeneinander angeordnet sind, ein kompakteres Baumaß aufweist. Die Drehung der Förderband-Rotationswalzen-Einheit erfolgt um eine gedachte Schwenkachse, welche vorteilhafterweise oberhalb des Förderbandes und neben der Rotationswalze entlang einer Geraden verläuft, welche mit der Längsachse eines auf dem Förderband aufliegenden typischen Behälters übereinstimmt. Aufgrund dieser Eigenschaft verändert sich die Position eines Behälters während des Schwenkens der Förderband-Rotationswalzen-Einheit nicht. Der Behälter verbleibt auch bei einem Verkippen oder Verschwenken der Förderband-Rotationswalzen-Einheit auf dem für den Fördervorgang vorgegebenen Niveau.

In der Ausgangsposition der Schwenkeinrichtung ist das Förderband horizontal ausgerichtet. Ein Schwenken der Förderband-Rotationswalzen-Einheit führt dazu, dass das nunmehr geneigte Förderband und die seitlich neben dem Förderband angeordnete Rotationswalze gemeinsam einen auf ihnen aufliegenden Behälter von unten unterstützen. Sie bilden damit eine zumindest näherungsweise V-förmige Unterstützung. In dieser Position wird zum einen verhindert, dass der runde Behälter ohne Einwirkung äußerer Kräfte von der Transporteinrichtung rollt und nach unten fallen kann. Ferner kann je nach Antrieb der Behälter rotiert, in Längsrichtung gefördert oder sowohl rotiert als auch gefördert werden. Die entsprechenden Antriebe der Rotationswalze und des Förderbandes sind hierzu unabhängig voneinander steuerbar. Bei einem gleichzeitig Rotieren und Fördern des Behälters ist das Erkennen von Identifizierungsmerkmalen des Behälters anhand von oberhalb der Transportvorrichtung angeordneten Detektoren während des Transportierens des Behälters in Förderrichtung möglich.

Nach einer vorteilhaften Ausgestaltung der Erfindung ist in der Ausgangsposition der Förderband-Rotationswalzen-Einheit das Förderband horizontal angeordnet. In dieser Ausgangsposition verläuft die Rotationsachse der Rotationswalze oberhalb der Ebene, welche die nach oben weisende Seite des Förderbandes enthält. Der Abstand zwischen der Rotationsachse und der der Rotationswalze zugewandten Kante des Förderbandes ist größer als der Radius der Rotationswalze. Damit verläuft die Rotationswalze neben dem Förderband. Der Abstand zwischen der Kante des Förderbandes und der Rotationswalze ist vorteilhafterweise gering ausgebildet. In einer besonders bevorzugten Ausführungsform beträgt der Abstand zwischen der der Rotationswalze zugewandten seitlichen Kante des Förderbandes und der Rotationswalze zwischen 0,5 und 5% des Durchmessers der Rotationswalze.

Nach einer weiteren vorteilhaften Ausgestaltung der Erfindung verläuft in der Ausgangsposition der Schwenkeinrichtung die gedachte Schwenkachse der Schwenkeinrichtung oberhalb des Förderbandes. Nach einer besonders bevorzugten Ausgestaltung der Erfindung verläuft sie oberhalb des Abschnitts des Förderbandes, der durch die der Rotationswalze abgewandte Kante und die in Förderrichtung verlaufende Mitte des Förderbandes begrenzt ist. Bei der Festlegung der Schwenkachse kommt es darauf an, dass ein auf der Transportvorrichtung aufliegender Behälter beim Schwenken der Förderband-Rotationswalzen-Einheit sein Niveau möglichst nicht oder allenfalls geringfügig verändert. Auch ein seitliches Ausweichen ist nicht erwünscht. Um dieses zu gewährleisten, müssen Schwenkachse und Symmetrieachse des Behälters in Längsrichtung zur Deckung gebracht werden. Da die Behälter unterschiedliche Formen und insbesondere unterschiedliche Durchmesser aufweisen können, ist der Abstand der Symmetrieachse in Längsrichtung der Behälter von der Oberfläche des Förderbandes und der Oberfläche der Transportwalze von Behälter zu Behälter verschieden. Die Schwenkeinrichtung wird daher um eine gedachte Schwenkachse rotiert, die für eine möglichst große Anzahl an Behältern die genannte Anforderung erfüllt.

Nach einer weiteren vorteilhaften Ausgestaltung der Erfindung verläuft in der Ausgangsposition der Förderband-Rotationswalzen-Einheit die gedachte Schwenkachse oberhalb der zum Förderband parallelen Ebene, in welcher die Rotationsachse der Rotationswalze verläuft. Damit wird den oben angegebenen Anforderungen an die Position der Schwenkachse Rechnung getragen.

Weitere Vorteile und vorteilhafte Ausgestaltungen der Erfindung sind der nachfolgenden Beschreibung, der Zeichnung und den Ansprüchen zu entnehmen.

In der Zeichnung ist ein Ausführungsbeispiel der erfindungsgemäßen Transportvorrichtung dargestellt. Es zeigen:
- Figur 1: perspektivische Darstellung einer Transportvorrichtung mit Behälter,
- Figur 2: Transportvorrichtung gemäß Figur 1 in einer Aufsicht von hinten, wobei sich die Förderband-Rotationswalzen-Einheit in ihrer Ausgangsposition befindet,
- Figur 3: Vorrichtung gemäß Figur 2, wobei sich die Förderband-Rotationswalzen-Einheit in einer geneigten Position befindet.

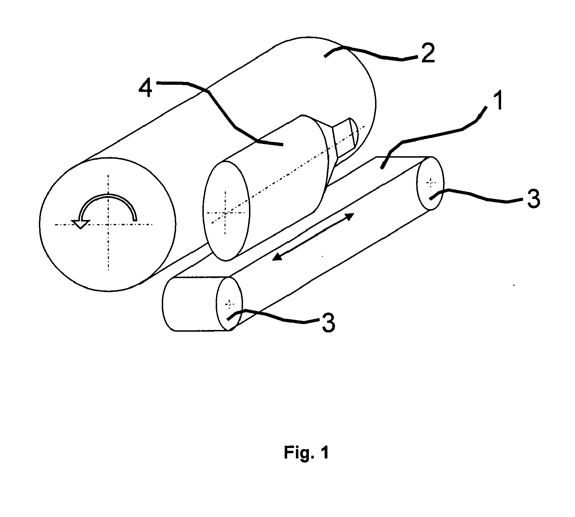

Figur 1 zeigt in perspektivischer Darstellung die Transporteinrichtung mit einem Förderband 1 und einer Rotationswalze 2. Bei dem Förderband 1 handelt es sich um ein Endlosförderband, welches über zwei Umlenkrollen 3 geführt ist. Die Transportrichtung des Förderbandes 1 ist in der Zeichnung durch Pfeile angedeutet. Die Rotationswalze 2 wird um eine in der Zeichnung nicht dargestellte Rotationsachse gedreht, welche entlang der Symmetrieachse der Rotationswalze in Längsrichtung verläuft. Die Drehrichtung der Rotationswalze ist auf der Stirnseite mit einem Pfeil dargestellt. Auf dem Förderband 1 liegt ein Behälter auf. Es handelt sich in diesem Fall um eine Flasche 4.

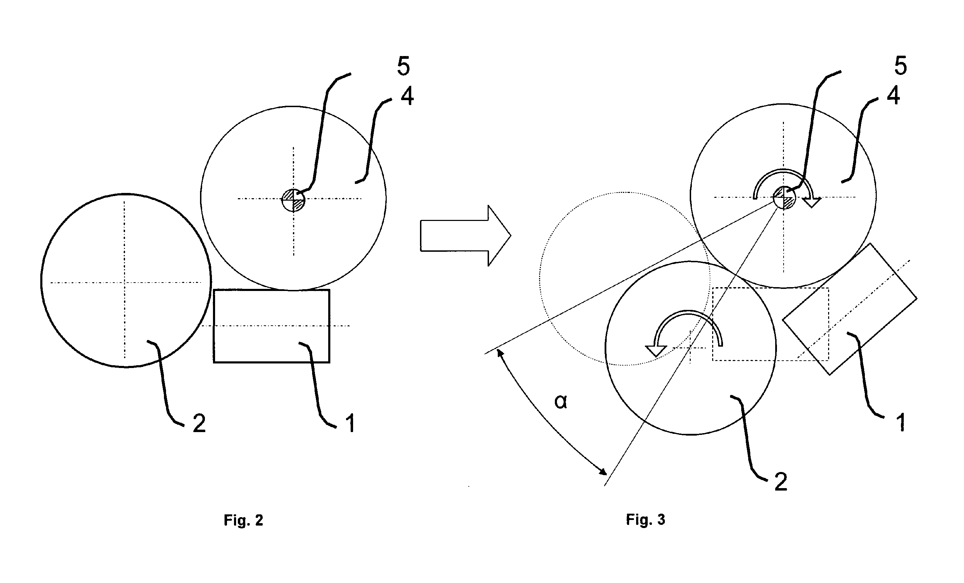

In Figur 2 ist die Transportvorrichtung in einer Ansicht von hinten dargestellt. Die Blickrichtung entspricht dabei der Förderrichtung des Förderbandes 1. In der dargestellten Position befindet sich die Schwenkeinrichtung sowie die Förderband-Rotationswalzen-Einheit in ihrer Ausgangsposition. In dieser Einstellung verläuft das Förderband horizontal. Die Flasche 4 kann, sofern notwendig, auf der linken Seite durch die Rotationswalze 2 gestützt werden. Eine derartige Situation liegt in der Darstellung gemäß Figur 2 nicht vor, da die Flasche 4 die Rotationswalze 2 nicht berührt. Auf der rechten Seite können sofern notwendig ortsfest angeordnete Stützelemente, wie beispielsweise Leitbleche, angeordnet sein. Diese sind in der Zeichnung nicht dargestellt. In der in Figur 2 dargestellten Position der Förderband-Rotationswalzen-Einheit wird üblicherweise nur das Förderband 1 angetrieben. Die Rotationswalze 2 ruht. Es erfolgt daher in dieser Position lediglich eine Bewegung des Behälters in Förderrichtung.

In Figur 3 ist die Förderband-Rotationswalzen-Einheit in einer gegenüber der Ausgangsposition gemäß Figur 2 verkippten Position dargestellt. Die Kippbewegung resultiert aus einer Drehung der Förderband-Rotationswalzen-Einheit um eine gedachte Schwenkachse 5, welche mit der Symmetrieachse der Flasche 4 identisch ist. Die Schwenkachse 5 und die Symmetrieachse der Flasche 4 sind in Figur 2 und 3 markiert. Aus Figur 2 ergibt sich, dass die Schwenkachse in der Ausgangsposition der Förderband-Rotationswalzen-Einheit oberhalb des Förderbandes 1 und oberhalb der durch die Rotationsachse der Rotationswalze 2 parallel zur Oberfläche des Förderbandes 1 verlaufenden Ebene angeordnet ist. Ferner befindet sich die Schwenkachse 5 oberhalb eines Abschnitts des Förderbandes, der durch die der Rotationswalze abgewandte Kante des Förderbandes 1 und durch die in Förderrichtung verlaufende Mitte des Förderbandes begrenzt ist. In der gemäß Figur 3 dargestellten verkippten Position der Förderband-Rotationswalzen-Einheit wird die Flasche 4 durch das Förderband 1 und die Rotationswalze 2 von unten unterstützt. Die Flasche 4 liegt damit sowohl auf dem Förderband 1 als auch auf der Rotationswalze 2 auf. Die Bewegungen des Förderbandes 1 und der Rotationswalze 2 übertragen sich aufgrund der Reibung auf die Flasche 4. Werden sowohl das Förderband 1 als auch die Rotationswalze 2 angetrieben, so führt die Flasche eine Überlagerung aus einer Translationsbewegung in Förderrichtung und einer Rotationsbewegung um die Längsachse aus. Wird dagegen lediglich die Rotationswalze angetrieben, so führt die Flasche lediglich eine Rotationsbewegung aus. Wird lediglich das Förderband angetrieben, so führt die Flasche lediglich eine Translationsbewegung in Förderrichtung aus.

Der Winkel, um den die Förderband-Rotationswalzen-Einheit anhand einer nicht dargestellten Schwenkeinrichtung gedreht wurde, ist in Figur 3 mit α gekennzeichnet. Die Förderband-Rotationswalzen-Einheit kann neben der Ausgangsposition und der in Figur 3 dargestellten gekippten Position in weiteren Position eingestellt werden. Diese unterscheiden sich jeweils durch die Größe des Winkels α. Beim Verkippen um einen Winkel α kommt es jeweils darauf an, welche Bewegung die Flasche 4 ausführen soll. Die Übertragung der Bewegung von Förderband oder Rotationswalze hängt von der Reibungskraft ab. Diese wiederum hängt davon ab, mit welcher Kraft die Flasche 4 auf die Oberfläche von Förderband 1 oder Rotationswalze 2 gedrückt wird. Diese Kraft entspricht der senkrecht zur Oberfläche wirkenden Komponente der Gewichtskraft der Flasche 4. Wird daher ausschließlich eine Rotationsbewegung der Flasche 4 gewünscht, so wird die Förderband-Rotationswalzen-Einheit um einen größeren Winkel α gekippt, als bei einer Überlagerung von Rotation und Translation.

Sämtliche Merkmale der Erfindung können sowohl einzeln als auch in beliebiger Kombination miteinander erfindungswesentlich sein.

### Bezugszeichenliste

- 1: Förderband
- 2: Rotationswalze
- 3: Umlenkrolle
- 4: Flasche
- 5: Schwenkachse

## Patentansprüche

1. Transportvorrichtung für Behälter wie beispielsweise Flaschen oder Dosen,
mit einem Förderband (1) zum Transport eines Behälters (4) in liegender Position in Richtung seiner Längsachse,
mit einer Rotationswalze (2), deren Rotationsachse parallel zum Förderband (1) verläuft,
**dadurch gekennzeichnet,**
**dass** das Förderband (1) und die Rotationswalze (2) an einem Träger befestigt sind und eine Förderband-Rotationswalzen-Einheit bilden, und dass die Transportvorrichtung mit einer Schwenkeinrichtung ausgestattet ist, um die Förderband-Rotationswalzen-Einheit um eine zur Rotationsachse der Rotationswalze (2) parallel verlaufende, gedachte Schwenkachse (4) zu drehen.

2. Transportvorrichtung nach Anspruch 1, **dadurch gekennzeichnet, dass** in der Ausgangsposition der Förderband-Rotationswalzen-Einheit das Förderband (1) horizontal angeordnet ist und die Rotationsachse der Rotationswalze (2) oberhalb der durch die nach oben weisende Seite des Förderbandes (1) gebildeten Ebene verläuft und der Abstand zwischen der Rotationsachse und der der Rotationswalze (2) zugewandten Kante des Förderbandes (1) größer ist als der Radius der Rotationswalze (2).

3. Transportvorrichtung nach Anspruch 2, **dadurch gekennzeichnet, dass** der Abstand zwischen der Rotationsachse der Rotationswalze (2) und der durch die nach oben weisende Seite des Förderbandes (1) verlaufenden Ebene zwischen 2 und 20% des Durchmessers der Rotationswalze (2) beträgt.

4. Transportvorrichtung nach Anspruch 2 oder 3, **dadurch gekennzeichnet, dass** der Abstand zwischen der der Rotationswalze (2) zugewandten seitlichen Kante des Förderbandes (1) und der Rotationswalze (2) zwischen 0,5 und 5 % des Durchmessers der Rotationswalze (2) beträgt.

5. Transportvorrichtung nach einem der vorhergehenden Ansprüche, **dadurch gekennzeichnet, dass** in der Ausgangsposition der Förderband-Rotationswalzen-Einheit die gedachte Schwenkachse (5) der Schwenkeinrichtung oberhalb des Förderbandes (1) verläuft.

6. Transportvorrichtung nach einem der vorhergehenden Ansprüche, **dadurch gekennzeichnet, dass** in der Ausgangsposition der Förderband-Rotationswalzen-Einheit die Schwenkachse (5) oberhalb des Abschnitts des Förderbandes (1) verläuft, der durch die der Rotationswalze (2) abgewandten Kante und die in Förderrichtung verlaufende Mitte des Förderbandes (1) begrenzt ist.

7. Transportvorrichtung nach einem der vorhergehenden Ansprüche, **dadurch gekennzeichnet, dass** in der Ausgangsposition der Förderband-Rotationswalzen-Einheit die gedachte Schwenkachse (5) oberhalb der durch die Rotationsachse der Rotationswalze (2) parallel zum Förderband (1) verlaufenden Ebene verläuft.

8. Transportvorrichtung nach einem der vorhergehenden Ansprüche, **dadurch gekennzeichnet, dass** sie mit einem Förderantrieb für das Förderband (1), mit einem Rotationsantrieb für die Rotationswalze (2) und mit einem Schwenkantrieb für die Schwenkeinrichtung ausgestattet ist, und dass alle drei Antriebe unabhängig voneinander steuerbar sind.

9. Behälterrücknahmevorrichtung zur Rücknahme von Behältern, wie beispielsweise Flaschen oder Dosen, **dadurch gekennzeichnet, dass** sie mit einer Transportvorrichtung nach einem der Ansprüche 1 bis 8 ausgestattet ist.
